(19) Europäisches Patentamt / European Patent Office / Office européen des brevets

(11) **EP 3 563 129 B1**

(12) **FASCICULE DE BREVET EUROPEEN**

(45) Date de publication et mention de la délivrance du brevet:
**07.09.2022 Bulletin 2022/36**

(21) Numéro de dépôt: **17836034.3**

(22) Date de dépôt: **29.12.2017**

(51) Classification Internationale des Brevets (IPC):
**G01J 5/04** (2006.01)   **G01J 5/20** (2006.01)

(52) Classification Coopérative des Brevets (CPC):
**G01J 5/045; G01J 5/20**

(86) Numéro de dépôt international:
**PCT/EP2017/084824**

(87) Numéro de publication internationale:
**WO 2018/122382 (05.07.2018 Gazette 2018/27)**

(54) **DETECTEUR DE RAYONNEMENT ELECTROMAGNETIQUE ET NOTAMMENT DE RAYONNEMENT INFRAROUGE ET PROCEDE POUR SA REALISATION**

DETEKTOR FÜR ELEKTROMAGNETISCHE STRAHLUNG UND INSBESONDERE INFRAROTSTRAHLUNG SOWIE VERFAHREN ZUR HERSTELLUNG DES DETEKTORS

DETECTOR OF ELECTROMAGNETIC RADIATION AND IN PARTICULAR INFRARED RADIATION, AND PROCESS FOR PRODUCING SAID DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2016 FR 1663552**

(43) Date de publication de la demande:
**06.11.2019 Bulletin 2019/45**

(73) Titulaires:
• **Commissariat à l'Énergie Atomique et aux Énergies Alternatives**
**75015 Paris (FR)**
• **LYNRED**
**91120 Palaiseau (FR)**

(72) Inventeurs:
• **CORTIAL, Sébastien**
**38360 Sassenage (FR)**
• **GUILLAUMONT, Marc**
**38000 Grenoble (FR)**
• **PELENC, Denis**
**38950 Quaix En Chartreuse (FR)**
• **ZUCCHI, Xavier**
**38410 Vaulnaveys-Le-Haut (FR)**

(74) Mandataire: **Cabinet Laurent & Charras**
**Le Contemporain**
**50 Chemin de la Bruyère**
**69574 Dardilly Cedex (FR)**

(56) Documents cités:
**EP-A1- 2 264 765      WO-A1-2016/009126**
**WO-A2-2009/131674    US-A1- 2006 131 501**

• **BARRY E. COLE ET AL: "Integrated vacuum packaging for low-cost lightweight uncooled microbolometer arrays", PROCEEDINGS OPTICAL DIAGNOSTICS OF LIVING CELLS II, vol. 4369, 10 octobre 2001 (2001-10-10), page 235, XP055427464, US ISSN: 0277-786X, DOI: 10.1117/12.445291 ISBN: 978-1-5106-1157-3**

EP 3 563 129 B1

**Description**

**DOMAINE DE L'INVENTION**

L'invention a trait au domaine de l'imagerie infrarouge. Plus particulièrement, l'invention concerne la fabrication de détecteurs de rayonnement électromagnétique et notamment infrarouge intégrant des détecteurs bolométriques.

**ETAT DE LA TECHNIQUE**

Dans le domaine des détecteurs infrarouges, il est connu d'utiliser des dispositifs agencés sous forme matricielle et susceptibles de fonctionner à température ambiante, c'est-à-dire ne nécessitant pas de refroidissement à très basse température, contrairement aux dispositifs d'imagerie appelés « détecteurs quantiques », qui eux nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300 K. Dans le cas des détecteurs bolométriques, cette grandeur physique est la résistivité électrique.

Un tel détecteur non refroidi associe généralement :

- des moyens d'absorption du rayonnement infrarouge et de conversion de celui-ci en chaleur,
- des moyens d'isolation thermique du détecteur, de telle sorte à permettre à celui-ci de s'échauffer sous l'action du rayonnement infrarouge,
- des moyens de thermométrie qui, dans le cadre d'un détecteur bolométrique, mettent en œuvre un élément résistif formé à partir d'électrodes et d'un élément de matériau sensible dit « thermistor»,
- et des moyens de lecture des signaux électriques fournis par les moyens de thermométrie.

Les moyens d'absorption du rayonnement infrarouge et de thermométrie sont intégrés dans une membrane suspendue par les moyens d'isolation thermique au-dessus d'un substrat, dans lequel sont disposés les moyens de lecture, et notamment, un circuit de lecture intégré ROIC (pour l'acronyme anglo-saxon « *Readout Integrated Circuit* »). Ces moyens d'isolation thermique sont typiquement constitués de poutres étroites, couramment appelées « bras », encastrées sur des piliers électriquement conducteurs.

Les détecteurs sont classiquement réalisés sous la forme d'une matrice de détecteurs élémentaires selon une ou deux dimensions, ladite matrice étant formée de manière dite monolithique, ou reportée sur le substrat, ce dernier étant généralement réalisé en technologie CMOS (acronyme anglo-saxon pour « *Complementary Metal Oxide Semiconductor* ») sur silicium, et dans lequel sont constitués des moyens d'adressage séquentiel des détecteurs élémentaires, et des moyens d'excitation électrique et de pré-traitement des signaux électriques formés à partir de ces détecteurs élémentaires.

L'ensemble est placé dans une enceinte hermétique, typiquement un boîtier sous pression très réduite, de manière à rendre totalement négligeable la conductance thermique du gaz environnant. Pour obtenir une scène par l'intermédiaire de ce type de détecteurs, on projette ladite scène à travers un système optique adapté sur la matrice de détecteurs élémentaires, et des stimuli électriques cadencés sont appliqués par l'intermédiaire du circuit de lecture à chacun des détecteurs élémentaires, ou à chaque rangée de tels détecteurs, apte à produire un signal électrique constituant l'image de la température atteinte par chacun des détecteurs élémentaires.

Ce signal est traité de manière plus ou moins élaborée par le circuit de lecture, puis éventuellement par un dispositif électronique extérieur au boîtier, afin de générer l'image thermique de la scène observée.

L'un des éléments clé de ce type de détecteurs réside donc dans les moyens de thermométrie, typiquement constitués d'un élément de surface défini dans un film mince, ainsi que dans la structure de chaque micro-détecteur (ou pixel), afin de transformer toute variation de température en variation de courant électrique qui le traverse.

Ainsi, la résistance électrique d'un micro-détecteur $R_b$ s'exprime en fonction de la résistivité $\rho$ du matériau thermistor par la relation :

$$Rb = \rho * \frac{L}{w*e} \qquad (1)$$

expression dans laquelle L, w et e désignent respectivement la longueur, la largeur et l'épaisseur de l'élément (en général parallélépipédique) de matériau thermistor parcouru par le courant électrique.

La réponse $\Re$ (V/K) dudit micro-détecteur de résistance Rb polarisé sous tension constante $V_{pol}$ exprime la variation de signal en sortie $\delta S$ en relation avec une variation de température de scène $\delta T_{SC}$, selon la relation générale

suivante :

$$\mathfrak{R} = \frac{\partial S}{\partial T_{sc}} = \frac{V_{pol}}{Rb} A * \varepsilon * TCR * R_{th} * \frac{(P_{T2}-P_{T1})}{(T2-T1)} * \frac{T_{int}}{C_{int}} \qquad (2)$$

relation dans laquelle :

- A est l'aire totale du point élémentaire sensible (pixel détecteur),
- ε est l'efficacité globale d'absorption optique du bolomètre,
- TCR (pour l'acronyme anglo-saxon « *Temperature Coefficient of Resistance* ») est représentatif d'un coefficient de variation de la résistivité du matériau constituant la partie sensible du bolomètre au voisinage de la température de fonctionnement,
- $R_{th}$ est la résistance thermique entre la membrane et le substrat (c'est-à-dire des bras de maintien),
- $P_{T1}$ est la puissance radiative incidente issue de la scène à température T1, intégrée sur le spectre (8-14μm typiquement, c'est-à-dire la bande de l'infrarouge lointain ou LWIR pour les anglo-saxons) et dans un angle solide caractérisé par le système optique mis en œuvre.
- $P_{T2}$ est l'équivalent de $P_{T1}$ pour une température de scène T2 supérieure à T1.
- Tint est la durée d'intégration du courant circulant dans le micro détecteur, dans une capacité Cint qui caractérise l'amplificateur analogique (ou CTIA pour « *Trans Impedance Amplifier* ») du circuit de lecture.

Les relations (1) et (2) montrent que la réponse de chaque micro-détecteur est liée directement aux propriétés intrinsèques du matériau « thermistor », soit sa résistivité ρ et son TCR. On notera que ces deux paramètres sont interdépendants.

Il est donc nécessaire de choisir le couple TCR-p adapté aux contraintes technologiques liées à la fabrication, et aux performances visées. Le maintien de ces paramètres tout au long de l'intégration technologique constitue un élément déterminant pour obtenir des performances et des rendements compatibles avec les exigences industrielles.

Parmi les matériaux thermistor mis en œuvre, on distingue principalement le silicium amorphe et les oxydes de vanadium (VOx). Ces derniers sont connus pour présenter généralement une structure très désordonnée, voire amorphe (voir par exemple la thèse de Bryan D. Gauntt « The nano-composite nature of Vanadium oxyde thin-films for use in Infrared Microbolometers » - May 2011). Par définition, ces matériaux ne sont pas à l'équilibre thermodynamique et sont susceptibles d'évoluer sous l'effet des sollicitations thermiques mises en jeu. Les VOx s'avèrent particulièrement pertinents dans le contexte général des détecteurs bolométriques, en raison d'une résistivité ajustable, d'un coefficient TCR élevé et d'un faible niveau de bruit.

Ainsi, une valeur de TCR supérieure ou égale à 2% est typiquement accessible si la résistivité du VOx se situe au-dessus de 0.1 ohm.cm mesurée à 30°C. Pour des résistivités fixées en dessous de ce seuil, la faible valeur du TCR ne permet plus de garantir les caractéristiques des détecteurs à un niveau suffisant.

Par ailleurs, des résistivités élevées pénalisent la réponse $\mathfrak{R}$ des micro-détecteurs en provoquant une hausse de leur résistance électrique Rb. Afin de définir une valeur de résistivité maximale au-delà de laquelle la réponse d'un micro détecteur deviendrait trop faible, une application numérique de l'équation (2) peut être réalisée. La réponse $\mathfrak{R}$ traduit l'écart de signal délivré par le détecteur pour un contraste de 1 degré observé sur la scène. Afin de produire une image de bonne qualité, la réponse $\mathfrak{R}$ se situe typiquement dans une plage de 5 à 15 mV/degré.

Si l'on considère qu'une valeur de 2 mV/degré constitue un minimum en dessous duquel l'image serait très dégradée par manque de contraste, et ainsi rendue non exploitable, l'équation (2) permet de déterminer la résistance Rb maximale, et d'en déduire la résistivité associée par l'équation (1) en considérant un thermistor carré (w = L) d'une épaisseur de 200 nanomètres.

Outre les difficultés industrielles induites par le dépôt de films épais, la masse suspendue limite la rapidité du détecteur. Un thermistor d'une épaisseur supérieure à 200 nanomètres ne permettrait pas d'obtenir une constante de temps thermique inférieure à 15 ms environ, maximum typique du domaine.

La valeur des puissances incidentes peut être calculée selon la loi de Planck. En considérant que la scène est vue par le détecteur muni d'une fenêtre typique essentiellement transparente en bande LWIR et opaque pour toute autre longueur d'onde, à travers un orifice de diamètre φ placé à une distance d = φ du plan focal, les puissances reçues par exemple pour des températures de scène respectivement de 20°C et 35°C sont :

- $P_{T1=20°C}$ = 38.66 W/m$^2$
- $P_{T2=35°C}$ = 48.56 W/m$^2$

Dans cet exemple, le pixel détecteur présente une surface de $17\mu$m $\times$ $17\mu$m, une résistance thermique de $100^E6$ K/W et un rendement d'absorption de 80% ; il est doté d'un thermistor carré d'une épaisseur de 200 nm et d'un TCR de 2% et polarisé avec Vpol = 2V.

L'amplificateur analogique doit satisfaire des contraintes diverses, soit une valeur de Tint de $50\mu$s compatible avec un fonctionnement de l'imageur à 50 Hertz, en mode « *Rolling shutter* », c'est-à-dire en lecture séquentielle des lignes, et une capacité Cint relativement élevée, soit 6 pF pour minimiser les dispersions et le bruit électronique découlant de l'intégration du courant.

L'insertion de ces paramètres dans l'équation (2) permet de conclure qu'une résistance Rb de $2.5^E6$ Ohm conduit à une réponse de 2 mV/degré.

La résistivité correspondante est donc proche de 50 Ohm.cm, valeur qui peut dès lors être considérée comme une borne supérieure.

Les films minces d'oxyde de vanadium VOx sont déposés sur un substrat, typiquement par des techniques de PVD (acronyme anglo-saxon pour « *Physical Vapor Deposition* »). Selon cette technique, une cible de vanadium ou d'un composé contenant du vanadium, est placée sous vide, et bombardée par les atomes d'un gaz neutre ionisé, typiquement de l'argon ou du krypton.

Lorsque ce processus se déroule en présence d'oxygène ou d'un autre gaz oxydant, introduit dans le réacteur de façon contrôlée, les atomes de vanadium arrachés à la cible sous l'action du bombardement ionique réagissent avec l'oxygène pour former une couche de VOx sur le substrat placé sensiblement en vis-à-vis de ladite cible.

On a pu montrer (selon par exemple la thèse de Bryan D. GAUNTT « The nano-composite nature of Vanadium oxyde thin films for use in Infrared Microbolometers » - May 2011) que la résistivité du film de VOx obtenu dépend de la valeur de x, cette dernière étant liée, au premier ordre, à la pression partielle d'oxygène dans le réacteur.

Afin d'obtenir une réponse exploitable du détecteur bolométrique, il est nécessaire d'assurer une isolation thermique maximale entre la structure sensible du bolomètre, et notamment la membrane suspendue, et son environnement. Afin de garantir cette condition, les microstructures sont placées dans une ambiance à très basse pression, typiquement proche de $10^{-3}$ mbar.

Dans les faits, une fenêtre transparente dans l'infrarouge, typiquement réalisée en silicium ou en germanium, est scellée sur le dessus d'un boîtier évidé, au fond duquel la puce-détecteur est préalablement fixée, ou directement sur la puce elle-même dans le cas d'un processus collectif du type « *Wafer Level Packaging* ».

Quel que soit le processus mis en œuvre, les deux pièces sont solidarisées au moyen d'un joint de scellement métallique (ou brasure) que l'on fait fondre localement, et qui permet d'obtenir une herméticité compatible avec le fonctionnement du détecteur et durable dans le temps.

Néanmoins, et en raison des phénomènes de dégazage qui interviennent pendant ou après le scellement, afin de garantir le maintien du bas niveau initial de pression dans le boîtier tout au long de la durée de vie du détecteur, malgré le dégazage de surface des éléments internes du boîtier, il est connu d'intégrer dans ledit boîtier un dispositif de piégeage des gaz appelés « getter », qui absorbe les molécules de gaz résiduels. De tels matériaux « getter » sont classiquement constitués d'un alliage métallique, qui devient très réactif à partir d'un seuil de température appelé température d'activation.

Il résulte de ces contraintes d'encapsulation sous vide, et notamment de l'opération de scellement, et de l'activation du getter, la nécessité d'un traitement thermique susceptible de détériorer les performances du détecteur proprement dit en raison de l'évolution des propriétés et caractéristiques du matériau thermistor.

Par exemple, le choix d'un alliage eutectique AuSn (80/20) typique en tant que joint métallique permet de limiter ces sollicitations thermiques grâce à un bas point de fusion, en l'espèce autour de 280°C. Avec ce type d'alliage, un scellement réalisé à une température proche de 300°C permet donc l'obtention d'un joint fiable, susceptible de garantir une robustesse suffisante pour supporter les procédés ultérieurs d'intégration dans un système plus complexe.

Corollairement, l'activation du getter est dépendante des matériaux qui le constituent. Elle intervient généralement à relativement haute température. Cependant, des alliages spécifiques optimisés permettent d'abaisser le seuil d'activation de tels matériaux getter autour de 300°C, tout en garantissant une bonne capacité de pompage ou de piégeage des gaz (exemple : le produit « Pagewafer » de la société SAES).

Les étapes de formation du joint de scellement et d'activation du getter sont en général, et pour des raisons économiques, traitées simultanément lors d'un cycle thermique unique qui soumet, en conséquence, la puce détecteur à une température supérieure ou égale à 300°C. Le document WO2016/09126 décrit un tel procédé. Il est généralement nécessaire de maintenir cette température pendant au moins 10 minutes, et éventuellement jusqu'à 90 minutes par exemple si l'activation du getter le nécessite.

Cette procédure définit un ordre de grandeur de budget thermique minimal, compatible avec les contraintes industrielles, tout en assurant une excellente stabilité du niveau de vide tout au long de la vie du détecteur.

Cependant, l'utilisation de matériaux thermistor VOx désordonnés, c'est à dire en dehors de l'équilibre thermodynamique, via un processus de fabrication dans cette gamme de températures peut engendrer des variations de leurs propriétés électriques intrinsèques ($\rho$ et TCR) qui régissent la sensibilité des détecteurs et la qualité du signal détecté.

En effet, les pixels d'un détecteur matriciel sont « lus » par un dispositif électronique de lecture calibré pour délivrer un signal pour chaque pixel, et qui découle directement de la valeur de résistance de ce dernier. Ce dispositif électronique de lecture peut lire des valeurs de résistance dans une plage déterminée par sa dynamique électrique, définie par les valeurs minimum et maximum de tension de sortie d'un amplificateur analogique.

Ainsi, afin de pouvoir utiliser cette dynamique pour mesurer les variations de résistance engendrées par la captation du rayonnement infrarouge, il est nécessaire de minimiser la dispersion initiale des pixels de la matrice de détecteurs. Ceci requiert une parfaite uniformité du matériau thermistor sur toute la surface du détecteur matriciel.

Si les procédés de dépôt de type PVD mis en œuvre pour l'élaboration de films de VOx conduisent à de très bonnes uniformités spatiales, la réalisation d'un détecteur matriciel intégrant de tels matériaux thermistor soumis au processus de scellement sous vide, tel que décrit précédemment, c'est-à-dire dans une gamme de température typiquement voisine de 300°C, peut affecter de manière importante, voire rédhibitoire l'uniformité du signal de sortie, et donc corollairement les performances d'un tel détecteur.

En effet, pour des motivations de capacité et d'optimisation industrielle, les cycles thermiques de scellement sont préférentiellement courts et opérés dans des fours sous vide poussé, condition qui pénalise l'homogénéisation thermique et le transfert de chaleur du four vers les pièces.

Le stress thermique n'étant ainsi pas uniforme et le matériau thermistor en VOx classiquement mis en œuvre dans l'état antérieur de la technique, c'est-à-dire avec une résistivité fixée dans une plage de 0,1 à 1 ohm.cm mesurée à 30 °C, étant sensible à la température atteinte localement, ce processus conduit immanquablement à une dispersion accrue des valeurs de résistance des micro-détecteurs sur le détecteur matriciel, se traduisant par un étalement de la distribution du signal de sortie dans la plage de dynamique du circuit de lecture, qui altère de manière quasi-rédhibitoire, au moins en termes de statistique de production, la dispersion dudit signal de sortie et l'image en résultant. En d'autres termes, l'évolution non-uniforme du matériau thermistor consécutif à l'application d'un procédé thermique inhomogène sur un matériau instable dans la plage de température considérée (et typiquement 280 - 320°C) détériore l'uniformité du détecteur matriciel de façon rédhibitoire.

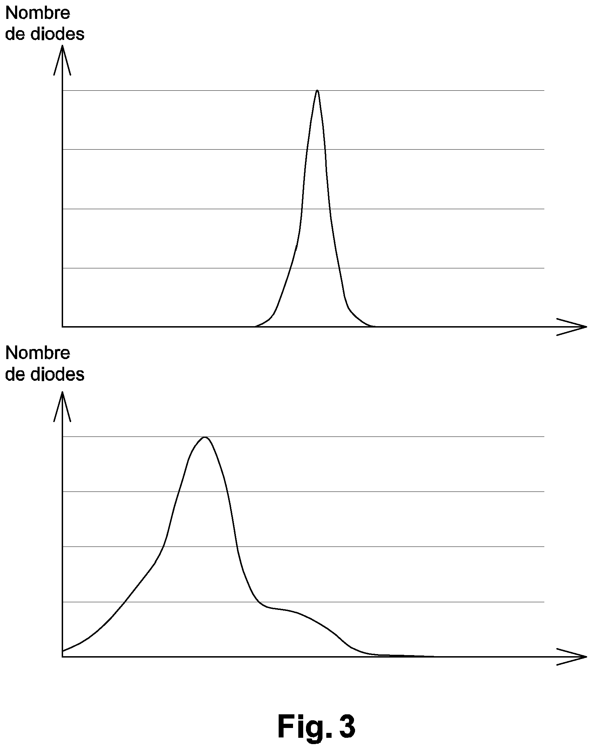

A titre d'exemple, si l'ensemble des pixels d'un détecteur matriciel dont les résistances présentent une dispersion initiale de 1%, évolue de façon non homogène lors du scellement sous vide, pour présenter finalement une dispersion de 3%, la population de pixels qui était initialement concentrée au centre de la dynamique du circuit de lecture se retrouve distribuée sur la quasi-totalité de la dynamique de lecture (voir la figure 3 - partie inférieure).

Il a été montré (voir par exemple les publications de S. GARCIA-BLANCO et al « Low temperature vacuum hermetic wafer-level package for uncooled microbolometer FPAs » - SPIE Vol.6884 - 2008, ou encore S. GARCIA-BLANCO et al « Hybrid wafer-level vacuum hermetic micropackaging technology for MOEMS-MEMS » - SPIE Vol. 7208 - 2009) que les filières packaging habituelles mettant en œuvre une température de scellement supérieures à 300°C posent problème avec comme matériau thermistor les oxydes de Vanadium VOx, et il est suggéré une température de scellement pour de tels matériaux comprises entre 150 - 200 °C. Il est cependant observé qu'avec de telles températures de scellement, l'utilisation d'un getter efficace est impossible avec les technologies actuelles ce qui se traduit sur le niveau de vide dans le boitier qui se dégrade rapidement.

La publication Barry Cole et al. 2001, Proceedings of SPIE, XP055427464, "Integrated vacuum packaging for low-cost lightweight uncooled microbolometer arrays" décrit l'altération de la résistivité de films de VOx après recuits à différentes températures.

En d'autres termes, il existe une réelle difficulté dans la réalisation de ces détecteurs matriciels à l'échelle industrielle, née des contraintes thermiques budgétaires et de la pérennité des propriétés de ces détecteurs en termes de qualité des images détectées. En d'autres termes, on ne connait pas à ce jour de moyens simples pour réaliser des détecteurs matriciels du type en question, permettant tout à la fois de gérer les dispersions sans perturber l'intérêt industriel et ses contraintes budgétaires.

L'invention vise fondamentalement à pallier cette difficulté par une solution simple qui ne nécessite aucune adaptation des filières actuelles d'intégration des détecteurs en boitier ni aucun système électronique de correction des dispersions, et qui s'adapte dès lors parfaitement avec les processus industriels de réalisation de ces détecteurs.

## EXPOSE DE L'INVENTION

L'invention consiste en premier lieu à mettre en œuvre comme matériau thermistor un film d'oxyde de vanadium VOx de résistivité bien supérieure à celle décrite dans l'art antérieur, et typiquement comprise entre 6 et 50 ohm.cm, et avantageusement entre 6 et 24 ohm.cm, mesurée à 30°C.

A cet effet, elle consiste à réaliser par PVD, et par exemple par pulvérisation par faisceau d'ions (IBS) d'une cible en vanadium, un film d'oxyde de vanadium VOx, sous une pression partielle en $O_2$ contrôlée, sans aucun apport de chaleur durant la croissance de la couche d'oxyde sur un substrat constitué d'une tranche en silicium monocristallin, en faisant varier x entre 1.8 et 2,3 environ, ce qui correspond à des valeurs de résistivité de 6 ohm.cm et 50 ohm.cm respectivement mesurée à 30 °C (la correspondance entre la résistivité et une composition x est établie notamment dans la Thèse de Bryan D. GAUNTT précitée).

À l'aide d'un tel matériau, les Demandeurs ont pu montrer que dans la plage de températures d'intégration, et donc de fermeture (scellement) du boitier et d'activation du getter, c'est-à-dire typiquement comprise entre 280 et 320 °C, l'évolution de la résistivité du matériau thermistor mis en œuvre demeure très contenue, contrairement aux matériaux mis en œuvre dans l'art antérieur, cette stabilité se traduisant par une uniformité satisfaisante du signal résultant au niveau du circuit de lecture.

Ainsi donc, l'invention vise un détecteur de rayonnement infrarouge selon la revendication 5, le détecteur comprenant:

- une matrice de détecteurs bolométriques d'imagerie élémentaires, chacun des détecteurs bolométriques élémentaires étant constitué d'une membrane bolométrique comprenant un film réalisé en oxyde de vanadium VOx amorphe, x étant compris entre 1,8 et 2,3, dont la résistivité est comprise entre 6 ohm.cm et 50 ohm.cm, et avantageusement entre 6 ohm.cm et 24 ohm.cm, ladite membrane étant suspendue au-dessus d'un substrat intégrant un circuit de lecture du signal généré par lesdits détecteurs élémentaires, et d'adressage séquentiel des détecteurs élémentaires,
- au moins un getter destiné à assurer le piégeage de gaz résiduel pendant et après réalisation du détecteur ;
- une cavité hermétique dans laquelle est logée ladite matrice et ledit getter, cavité dont le capot supérieur comprend une fenêtre transparente au rayonnement infrarouge, ledit capot étant scellé sur une puce supportant la matrice de détecteurs élémentaires ou sur un boitier au fond duquel la puce supportant la matrice de détecteurs élémentaires a été fixée, cavité dans laquelle règne le vide ou une pression réduite.

L'invention concerne également un procédé pour la réalisation d'un tel détecteur de rayonnement infrarouge selon la revendication 1 . Ce procédé consiste essentiellement à opérer concomitamment le scellement du capot supérieur du boitier, après mise en place des détecteurs élémentaires en son sein, dont le matériau thermistor est constitué d'un film d'oxyde de vanadium VOx amorphe, x étant compris entre 1,8 et 2,3, dont la résistivité est comprise entre 6 ohm.cm et 50 ohm.cm, et avantageusement entre 6 ohm.cm et 24 ohm.cm mesurée à 30 °C et l'activation du getter à une température comprise entre 280 °C et 320 °C pendant une durée comprise entre 10 et 90 minutes.

Selon un mode de réalisation, le film réalisé en oxyde de vanadium VOx entrant dans la constitution de la membrane bolométrique a une résistivité comprise entre 6 ohm.cm et 9 ohm.cm mesurée à 30 °C, et le scellement du capot supérieur de la cavité sur cette dernière, après mise en place des détecteurs élémentaires et du getter en son sein, est réalisé à une température comprise entre 280°C et 300°C pendant une durée comprise entre 10 et 90 minutes.

Selon un autre mode de réalisation, le film réalisé en oxyde de vanadium VOx entrant dans la constitution de la membrane bolométrique a une résistivité comprise entre 9 ohm.cm et 24 ohm.cm mesurée à 30 °C, et le scellement du capot supérieur de la cavité sur cette dernière, après mise en place des détecteurs élémentaires et du getter en son sein, est réalisé à une température comprise entre 280°C et 320°C pendant une durée comprise entre 10 et 90 minutes.

Ce faisant, on allie à la fois la performance d'un tel détecteur en termes de qualité de l'image thermique acquise, avec les contraintes économiques inhérentes à sa fabrication, tout en assurant en outre, une longévité accrue de ce détecteur.

## BREVE DESCRIPTION DES FIGURES

La manière dont l'invention peut être réalisée et les avantages qui en découlent, ressortiront mieux de l'exemple de réalisation qui suit, donné à titre indicatif et non limitatif à l'appui des figures annexées.

La figure 1 est une représentation schématique d'un pixel bolométrique ou détecteur élémentaire bolométrique.
La figure 2 est une représentation schématique illustrant le principe de réalisation d'un film d'oxyde de vanadium par IBS (pour l'acronyme anglo-saxon « *Ion Beam Sputtering* ») qui constitue la technique privilégiée de l'état de l'art.
La figure 3 montre deux histogrammes représentant la dispersion du signal de sortie d'un détecteur matriciel de rayonnement infrarouge, respectivement :

- pour le cas conforme à l'invention d'un matériau qui n'a pas subi d'évolution lors de son intégration dans le détecteur (partie supérieure), et
- le cas de l'art antérieur d'un matériau VOx (partie inférieure) détérioré par le traitement thermique.

Les figures 4 et 5 sont des graphes représentatifs de la variation de la résistivité de films d'oxyde de vanadium VOx, pour différentes résistivités intrinsèques mesurées à 30°C, en fonction de la température de recuit, respectivement pour des durées de recuit de 90 et de 10 minutes.

## DESCRIPTION DETAILLEE DE L'INVENTION

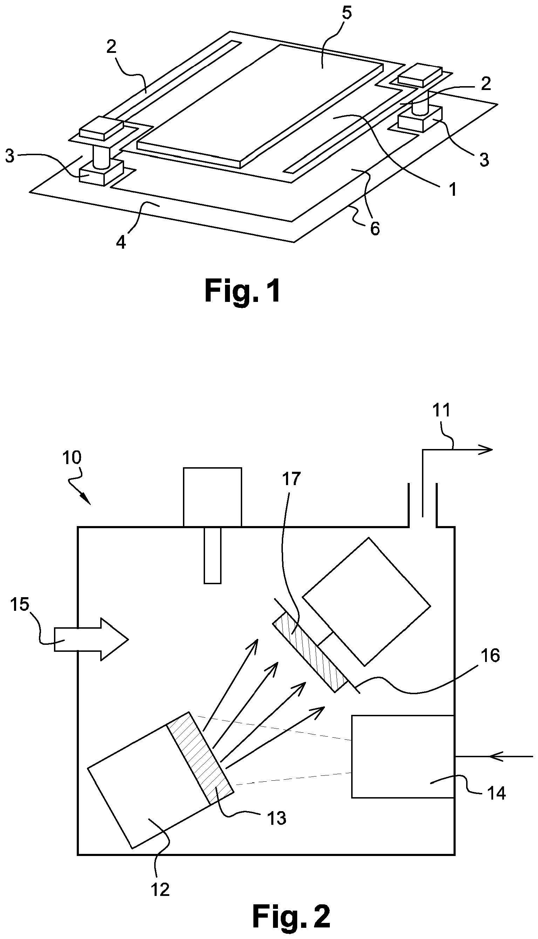

Il a été représenté au sein de la figure 1, un détecteur bolométrique élémentaire. Un tel détecteur est fondamentalement constitué d'une membrane (1) suspendue par l'intermédiaire de « bras » d'isolation thermique (2) et de piliers (3), assurant la connexion électrique avec le substrat (4).

Cette membrane (1) comporte un film mince de matériau thermistor (5) sur la majeure partie de sa surface, orientée en vis-à-vis d'une fenêtre transparente au rayonnement infrarouge (et typiquement en silicium ou en germanium).

Avantageusement, et pour optimiser les performances du détecteur élémentaire, un film métallique réflecteur (6) est apposé sous la membrane suspendue et à une distance adéquate de celle-ci, afin de constituer une cavité résonante et optimiser ainsi l'absorption du rayonnement infrarouge.

Le matériau thermistor (5) est constitué d'un film mince d'oxyde de vanadium VOx, d'épaisseur typique comprise entre 20 et 200 nanomètres, et dont la résistivité est comprise entre 6 ohm.cm et 50 ohm.cm. Ces valeurs de résistivité correspondent typiquement à une valeur de x comprise entre 1.8 et 2,3, telles que mesurées par la technique RBS (pour l'acronyme anglo-saxon « *Rutherford Backscattering Spectroscopy* »).

Ce film mince d'oxyde de vanadium VOx est réalisé par dépôt par IBS (pour l'acronyme anglo-saxon « *Ion Beam Sputtering* ») sur un substrat à température ambiante dans un réacteur en présence d'oxygène, dont la pression partielle est comprise entre $3 \times 10^{-5}$ Torr et $1 \times 10^{-4}$ Torr.

Un tel réacteur est illustré au sein de la figure 2. Ce réacteur (10), muni d'un système de pompage (11), comporte un support (12) recevant une cible (13) de vanadium pur ou quasiment pur. Cette cible est bombardée par un faisceau de krypton ionisé émis par un canon (14) connu en soi. L'utilisation de krypton n'est pas limitative, tout autre gaz rare peut être utilisé.

Les atomes de vanadium éjectés de la cible en suite de ce bombardement ionique, sont plus ou moins oxydés par l'oxygène (15) introduit dans le réacteur. La pression partielle d'oxygène présent dans l'enceinte du réacteur est contrôlée au moyen d'une boucle de régulation de manière à fixer la grandeur x finale à la valeur souhaitée. Ces atomes de vanadium pulvérisés s'oxydent pour former sur un substrat (16) une couche de VOx dont la résistivité est liée à la proportion x d'oxygène atomique.

Le substrat (16) est maintenu à une température proche de l'ambiante pendant le dépôt par un système de refroidissement (non représenté) utilisant un fluide caloporteur.

Afin de comparer la stabilité thermique de VOx de résistivité initiale mesurée à 30 °C comprise entre 0,5 et 24 Ohm.cm, le substrat choisi est composé d'un film de nitrure de silicium SiNx (voire d'oxyde de silicium SiOx) déposé sur une tranche 200 millimètres de silicium monocristallin. Ceci permet une excellente isolation électrique entre le film de VOx et le substrat silicium.

Une série de motifs carrés (motifs de type « Van der Pauw ») est ensuite définie par photolithographie, puis gravure du matériau VOx. Le matériau est ensuite contacté aux quatre coins de ce carré par le dépôt, puis la définition d'électrodes métalliques.

L'ensemble est ensuite encapsulé par une couche de nitrure de silicium SiNx effectué par PECVD (pour l'acronyme anglo-saxon « *Plasma-Enhanced Chemical Vapor Déposition* ») c'est-à-dire par dépôt chimique en phase vapeur assisté par plasma à basse température, soit 280°C afin de préserver les caractéristiques du matériau VOx. Cette encapsulation est réalisée de façon à recouvrir entièrement les motifs de VOx, de manière à isoler le matériau VOx de toute interaction chimique avec l'atmosphère ambiante lors des essais de recuit.

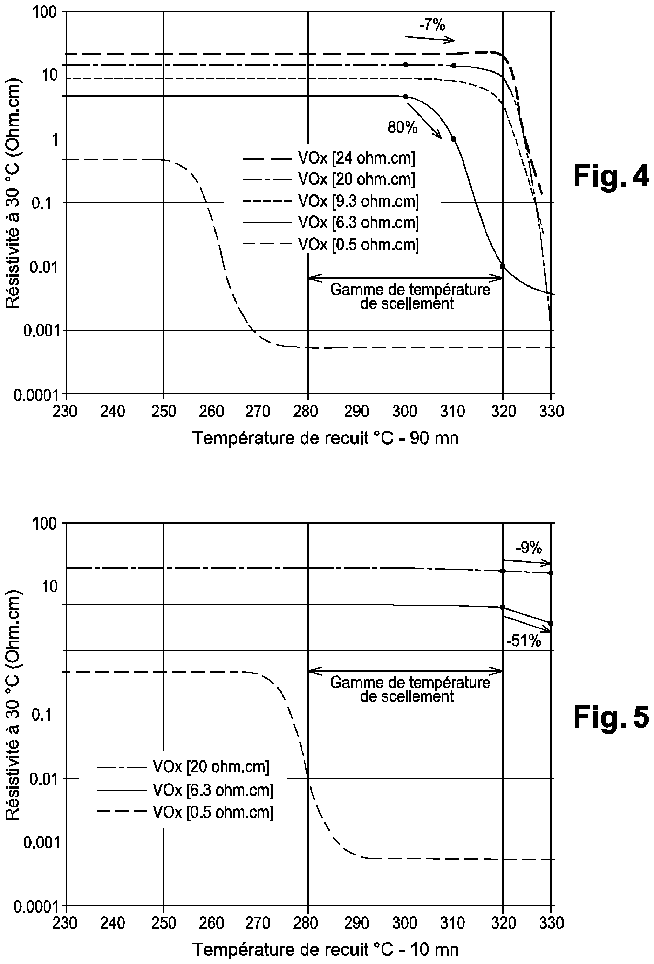

Les motifs sont ensuite polarisés par le biais des électrodes métalliques. La résistance carrée du film de VOx est ensuite déterminée par la méthode de Van der Pauw. L'épaisseur des films de VOx est déterminée par ellipsométrie sur des motifs dédiés et voisins. L'épaisseur et la résistance carrée connues de ces films définit leur résistivité. Cette méthode a été appliquée avant et après chaque recuit. Les résultats apparaissent sur le graphe de la figure 4 pour des recuits de 90 minutes. Il a été vérifié au préalable que la couche d'encapsulation en nitrure de silicium n'a pas modifié les propriétés du film de VOx.

Cinq tranches intégrant chacune un film de VOx, de résistivités respectives 0,5 ohm.cm, 6,3 ohm.cm, 9,3 ohm.cm, 20 ohm.cm et 24 ohm.cm mesurées à 30°C ont ainsi été réalisées. Ces résistivités sont corrélées à la valeur de x respective (à + ou - 0,1 près) de 1,6; 1,8; 1,9 ; 2 et 2,1.

Des échantillons prélevés sur ces tranches ont alors été soumis à des recuits réalisés sous balayage d'azote et à différentes températures, s'étageant entre 240 °C et 330 °C afin d'évaluer leur stabilité thermique, ou en d'autres termes leur robustesse vis-à-vis d'un stress thermique. Pour se placer délibérément dans la configuration la plus contraignante pour le matériau, mais la plus sûre en termes de fiabilité industrielle en particulier en termes de stabilité du vide des composants scellés, la durée des recuits a été fixée à 90 minutes.

On peut ainsi tirer les constatations suivantes par rapport aux courbes de la figure 4

Le film de résistivité initiale de 0,5 ohm.cm voit sa résistivité chuter de manière importante dès 250 °C.

Le film de résistivité initiale de 6,3 ohm.cm est stable jusqu'à 300 °C, puis voit sa résistivité brutalement chuter.

En revanche, les films de résistivité initiale de 9,3, 20 et 24 ohm.cm ne présentent qu'une très faible évolution en termes de résistivité jusqu'à 310 °C, ladite résistivité ne s'effondrant qu'à partir de 320 °C.

Le seuil de stabilité du matériau apparait donc lié à sa composition et sa résistivité intrinsèque ; les matériaux présentent les résistivités les plus élevées étant les plus stables. De telles mesures ont également été réalisées sur des échantillons identiques, mais pour des recuits de courte durée, typiquement 10 minutes, correspondant à un minimum réaliste pour un processus de scellement sous vide.

Ainsi, d'autres dispositifs intégrant les mêmes films de résistivités respectives initiales mesurées à 30 °C de 0,5 ohm.cm, 6.3 ohm.cm, et 20 ohm.cm ont été soumis à des recuits de 10 minutes sous balayage azote, à différentes températures couvrant la plage d'intérêt soit 280°C, 300°C, 310°C, 320°C et 330°C.

La valeur de résistivité mesurée après le recuit pour chaque échantillon, reportée sur le graphe de la figure 5, conduit aux constatations suivantes :

Le film de résistivité initiale de 0,5 ohm.cm n'a pas supporté le recuit à 280°C malgré une durée de recuit réduite à 10 minutes. Ce constat implique l'incompatibilité de ce matériau représentatif de l'état de l'art avec le processus de scellement sous vide dont il est question ici.

Le film de résistivité initiale de 6.3 ohm.cm conserve des caractéristiques stables jusqu'à 320°C au moins pour ce recuit de courte durée (10 minutes).

Le film de résistivité initiale de 20 ohm.cm supporte quant à lui un recuit de 10 minutes jusqu'à 330°C.

Ce faisant, en mettant en œuvre des détecteurs élémentaires intégrant comme matériau thermistor de l'oxyde de vanadium VOx, avec x compris entre 1.8 et 2,3, caractérisés par une résistivité mesurée comme indiqué précédemment, c'est-à-dire comprise entre 6 ohm.cm et 50 ohm.cm à 30 °C, il devient possible de réaliser des détecteurs matriciels infrarouges pourvus de performances élevées et pérennes, nonobstant l'étape de scellement du capot supérieur sur le boitier et d'activation du getter, qui comme déjà indiqué, est susceptible d'intervenir à au moins 300 °C dès lors que l'on choisit un joint métallique de scellement approprié (par exemple de type AuSn (80/20) et un matériau getter (par exemple du type commercialisé par la société SAES sous la référence « Pagewafer ») à relativement faible température d'activation.

La stabilité thermique de tels matériaux thermistors en termes de résistivité se traduit par une dispersion limitée du signal obtenu en sortie du circuit de lecture, et permet de conserver en sortie de l'amplificateur analogique un histogramme de distribution étroit et contenu au centre de la dynamique électrique, comme illustré sur la figure 3 (partie supérieure).

Un film de résistivité initiale (mesurée à 30 °C) intermédiaire, typiquement inférieure à 6 ohm.cm se montre instable dans la plage de température considérée, ce qui se traduit par un histogramme très élargi et qui occupe désormais la plus grande partie de la dynamique électrique (figure 3 - partie inférieure). Un tel matériau nécessiterait, si l'on souhaite conserver le haut niveau de fiabilité de la méthode de scellement indiquée précédemment, des systèmes de corrections électroniques complexes pour ramener chaque signal de sortie des pixels au centre de la dynamique du circuit de lecture.

Le film présentant la résistivité électrique la plus faible, 0.5 ohm.cm, subit une telle évolution dans la gamme de température appliquée qu'il doit être considéré incompatible avec cette technologie de scellement. Il présente un TCR nul ou trop faible, lui ôtant en conséquence tout intérêt. Un tel matériau nécessiterait la mise en œuvre d'alliages de scellement à basse température qui ne permettent pas l'utilisation de getters efficaces, ce qui met en péril la durabilité du vide et donc la fiabilité des composants réalisés par cette méthode.

Les Demandeurs ont également constaté qu'un film de VOx de résistivité proche de 1 ohm.cm présente une cinétique de dégradation sous atmosphère ordinaire plus rapide que les films de VOx décrits dans la présente invention.

En effet, il a été décrit (voir par exemple N.J. Podraza et al. - « Electrical and optical properties of sputtered amorphous vanadium oxide thin films » - Journal of Applied physics 111 n° 7 - 1er Avril 2012, ou encore M.A.Motyka et al. - « Mircostructural évolution of thin film vanadium oxide prepared by pulsed-direct current magnetron sputtering » - Journal of Applied Physics 112, n° 9 (2012)) qu'une couche de densité plus faible (souvent appelée « couche de rugosité » ou « *roughness layer* ») se forme en surface des films de VOx exposés à l'air ambiant. Des mesures par ellipsométrie interprétées par des modèles multicouches, c'est-à-dire qui considèrent, a minima, le film comme étant constitué de deux couches, l'une intègre, c'est-à-dire constituée à 100 % de VOx, et l'autre constituée à 50% de VOx et 50% d'air (selon la méthode « *Bruggeman effective medium approximation* ») permettent de déterminer l'épaisseur de cette « couche de rugosité ». Le suivi de l'épaisseur de cette couche en fonction du temps, pour une exposition à l'air et dans les mêmes conditions de température et d'humidité, montre une cinétique de croissance environ deux fois plus rapide dans le cas d'un film de VOx de 1 Ohm.cm par rapport à un film de 10 Ohm.cm.

A titre d'exemple, 40 jours après le dépôt des films de VOx, qui présentent une épaisseur totale de 80 nanomètres, l'épaisseur de cette couche de rugosité reste inférieure à 5 nanomètres pour un film VOx de résistivité 10 ohm.cm, mais en revanche dépasse les 10 nanomètres pour un film VOx de résistivité 1 ohm.cm.

Cette croissance s'effectue au détriment de la couche de VOx intègre. Il a été montré (par exemple dans les deux publications mentionnées précédemment) que cette couche de surface présente une résistivité plus élevée que le film intègre, ce qui modifie nécessairement la résistance par carré des films au cours du temps.

De plus, la présence d'une telle couche en surface, de faible densité et d'épaisseur variable, peut entrainer des problèmes de variabilité des procédés de photolithographie et de gravure, nécessaires à la définition des motifs de VOx. Ces deux complications sont susceptibles de détériorer les performances finales des détecteurs, soit en augmentant la résistance électrique des pixels au-delà de la valeur désirée, soit en augmentant la dispersion de ces valeurs. Il est possible cependant, de s'affranchir d'une encapsulation in-situ après dépôt, c'est-à-dire sans remise à l'air, des films de VOx, tel qu'il est préconisé dans la littérature (voir US 6 313 463), dès lors que les films thermistors conformes à la présente invention sont utilisés.

Il résulte de l'invention la possibilité de rendre compatibles les exigences en termes de performances de détecteurs infrarouges non refroidis de type matriciel et les contraintes liées à l'industrialisation de la fabrication de tels détecteurs.

En outre, de tels détecteurs sont plus aisément manipulables, lors de leur processus de réalisation, en raison de leur plus grande capacité à résister à l'oxydation à l'air ambiant.

**Revendications**

1. Procédé pour la réalisation d'un détecteur de rayonnement infrarouge, ledit détecteur étant constitué :

   - d'une matrice de détecteurs bolométriques d'imagerie élémentaires,
   - d'au moins un getter destiné à assurer le piégeage de gaz résiduel pendant et après réalisation du détecteur ;
   - d'une cavité hermétique dans laquelle est logée ladite matrice et ledit au moins un getter, dont le capot supérieur comprend une fenêtre transparente au rayonnement infrarouge ;

   détecteur dans lequel chacun des détecteurs bolométriques élémentaires est constitué d'une membrane bolométrique (1) comprenant un film (5) réalisé en oxyde de vanadium VOx amorphe, x étant compris entre 1,8 et 2,3, et dont la résistivité mesurée à 30 °C avant scellement du capot supérieur est comprise entre 6 ohm.cm et 50 ohm.cm, ladite membrane étant suspendue au-dessus d'un substrat (4) intégrant un circuit de lecture du signal généré par lesdits détecteurs élémentaires, et d'adressage séquentiel des détecteurs élémentaires, et dans lequel ledit capot est scellé au moyen d'un joint de scellement sur une puce supportant la matrice de détecteurs élémentaires ou sur un boitier au fond duquel la puce supportant la matrice de détecteurs élémentaires a été fixée, cavité dans laquelle règne le vide ou une pression réduite,
   procédé dans lequel

   - le scellement du capot supérieur de la cavité sur cette dernière, après mise en place des détecteurs élémentaires et du getter en son sein, est réalisé à une température comprise entre 280°C et 320°C pendant une durée comprise entre 10 et 90 minutes ;
   - et l'activation dudit getter s'effectue concomitamment avec le scellement du capot supérieur de la cavité.

2. Procédé pour la réalisation d'un détecteur de rayonnement infrarouge selon la revendication 1, dans lequel le film (5) réalisé en oxyde de vanadium VOx entrant dans la constitution de la membrane bolométrique (1) a une résistivité mesurée à 30°C comprise entre 6 ohm. cm et 24 ohm.cm.

3. Procédé pour la réalisation d'un détecteur de rayonnement infrarouge selon la revendication 2, dans lequel le film (5) réalisé en oxyde de vanadium VOx entrant dans la constitution de la membrane bolométrique (1) a une résistivité mesurée à 30°C comprise entre 6 ohm.cm et 9 ohm.cm, *caractérisé* **en ce que** le scellement du capot supérieur de la cavité sur cette dernière, après mise en place des détecteurs élémentaires et du getter en son sein, est réalisé à une température comprise entre 280°C et 300°C pendant une durée comprise entre 10 et 90 minutes.

4. Procédé pour la réalisation d'un détecteur de rayonnement infrarouge selon l'une des revendications 1 à 3, *caractérisé* **en ce que** le joint assurant le scellement du capot supérieur de la cavité est réalisé en alliage AuSn.

5. Détecteur de rayonnement infrarouge obtenu selon le procédé conforme à l'une des revendications 1 à 4, comprenant :

   - une matrice de détecteurs bolométriques d'imagerie élémentaires,
   - au moins un getter destiné à assurer le piégeage de gaz résiduel pendant et après réalisation du détecteur ;
   - une cavité hermétique dans laquelle est logée ladite matrice et ledit au moins un getter, cavité dont le capot supérieur comprend une fenêtre transparente au rayonnement infrarouge ;

dans lequel :

- chacun des détecteurs bolométriques élémentaires de la matrice est constitué d'une membrane bolométrique (1) comprenant un film (5) réalisé en oxyde de vanadium VOx amorphe, x étant compris entre 1,8 et 2,3, ladite membrane (1) étant suspendue au-dessus d'un substrat (4) intégrant un circuit de lecture du signal généré par lesdits détecteurs élémentaires, et d'adressage séquentiel des détecteurs élémentaires,
- ledit capot est scellé au moyen d'un joint de scellement sur une puce supportant la matrice de détecteurs élémentaires ou sur un boitier au fond duquel la puce supportant la matrice de détecteurs élémentaires a été fixée, cavité dans laquelle règne le vide ou une pression réduite.

**6.** Détecteur de rayonnement infrarouge selon la revendication 5, *caractérisé* **en ce que** le joint de scellement est réalisé en un alliage métallique AuSn.

**Patentansprüche**

**1.** Verfahren zur Herstellung eines Detektors für Infrarotstrahlung, wobei dieser Detektor besteht aus:

- einer Anordnung bolometrischer Bilddetektoren
- mindestens einem Getter, bestimmt zum Einfangen von Restgas während und nach der Herstellung des Detektors;
- einem hermetisch abgedichteten Hohlraum, in dem diese Anordnung und dieser mindestens eine Getter untergebracht sind, dessen obere Abdeckhaube ein gegenüber Infrarotstrahlung transparentes Fenster enthält;

ein Detektor, in dem jeder der bolometrischen Elementardetektoren aus einer bolometrischen Membran (1) besteht, die einen Film (5) enthält, der aus einem amorphen Vanadiumoxyd VOx besteht, wobei x zwischen 1,8 und 2,3 liegt und dessen bei 30 °C, vor dem Abdichten der oberen Abdeckhaube gemessener Widerstand zwischen 6 Ohm.cm und 50 Ohm.cm liegt, wobei diese Membran über einem Substrat (4) aufgehängt ist, das einen Schaltkreis zum Auslesen des von diesen Elementardetektoren erzeugten Signals, und zur sequentiellen Adressierung der Elementardetektoren enthält, und bei dem diese Abdeckhaube mittels einer Dichtungsfuge mit einem Chip dicht verbunden wird, der die Anordnung von Elementardetektoren trägt oder mit einem Gehäuse auf dessen Boden der Chip, der die Anordnung von Elementardetektoren trägt, befestigt wurde, in diesen Hohlraum herrscht ein Vakuum oder ein verringerter Druck,
Verfahren, bei dem

- die Abdichtung der oberen Abdeckhaube auf dem Hohlraum, nachdem die Elementardetektoren und der Getter darin untergebracht wurden, bei einer Temperatur zwischen 280°C und 320°C, während eines Zeitraums zwischen 10 und 90 Minuten ausgeführt wird;
- und die Aktivierung dieses Getters erfolgt gleichzeitig mit der Abdichtung der oberen Abdeckhaube des Hohlraums.

**2.** Verfahren zur Herstellung eines Detektors für Infrarotstrahlung nach Anspruch 1, bei dem der Film (5) aus Vanadiumoxid VOx, der im Aufbau der bolometrischen Membran (1) eine Rolle spielt, einen bei 30°C gemessenen Widerstand zwischen 6 Ohm.cm und 24 Ohm.cm hat.

**3.** Verfahren zur Herstellung eines Detektors für Infrarotstrahlung nach Anspruch 1, bei dem der Film (5) aus Vanadiumoxid VOx, der im Aufbau der bolometrischen Membran (1) eine Rolle spielt, einen bei 30°C gemessenen Widerstand zwischen 6 Ohm.cm und 9 Ohm.cm hat, *dadurch gekennzeichnet, dass* die Abdichtung der oberen Abdeckhaube des Hohlraums auf diesem, nachdem die Elementardetektoren und der Getter darin untergebracht wurden, bei einer Temperatur zwischen 280°C und 320°C, während eines Zeitraums zwischen 10 und 90 Minuten ausgeführt wird.

**4.** Verfahren zur Herstellung eines Detektors für Infrarotstrahlung nach einem der Ansprüche 1 bis 3, *dadurch gekennzeichnet, dass* die Fuge, die die Abdichtung der oberen Abdeckhaube des Hohlraums gewährleistet, aus AuSn - Legierung besteht.

**5.** Detektor für Infrarotstrahlung, hergestellt nach dem Verfahren entsprechend einem der Ansprüche 1 bis 4, der umfasst:

- eine Anordnung elementarer bolometrischer Bilddetektoren
- mindestens einen Getter, bestimmt zum Einfangen von Restgas während und nach der Herstellung des Detektors;
- einen hermetisch abgedichteten Hohlraum, in dem diese Anordnung und dieser mindestens eine Getter untergebracht sind, wobei die obere Abdeckhaube dieses Hohlraums ein gegenüber Infrarotstrahlung transparentes Fenster enthält;

bei dem

- jeder der bolometrischen Elementardetektoren aus einer bolometrischen Membran (1) besteht, die einen Film (5) enthält, der aus einem amorphen Vanadiumoxyd VOx besteht, wobei x zwischen 1,8 und 2,3 liegt und dessen bei 30 °C, vor dem Abdichten der oberen Abdeckhaube gemessene Widerstand zwischen 6 Ohm.cm und 50 Ohm.cm liegt, wobei diese Membran über einem Substrat (4) aufgehängt ist, das einen Ausleseschaltkreis des von diesen Elementardetektoren erzeugten Signals, und sequentieller Adressierung der Elementardetektoren enthält,
- bei dem diese Abdeckhaube mittels einer Dichtungsfuge mit einem Chip dicht verbunden wird, der die Anordnung von Elementardetektoren trägt oder auf ein Gehäuse auf dessen Boden der Chip, er die Anordnung von Elementardetektoren trägt befestigt wurde, in diesen Hohlraum herrscht ein Vakuum oder ein verringerter Druck.

**6.** Detektor für Infrarotstrahlung nach Anspruch 5, *dadurch gekennzeichnet, dass* die Abdichtungsfuge aus einer metallischen AuSn - Legierung besteht.

## Claims

**1.** A method of forming an infrared radiation detector, said detector being formed of:

- an array of elementary imaging bolometric detectors,
- at least one getter intended to ensure the trapping of residual gas during and after the forming of the detector;
- a hermetically-sealed cavity having said array and said at least one getter housed therein, having its upper cap comprising a window transparent to infrared radiation,

detector in which each of the elementary bolometric detectors is formed of a bolometric membrane (1) comprising a film (5) made of vanadium oxide VOx, x being in the range from 1.8 to 2.3, and having a resistivity measured at 30°C before sealing of the upper-cap in the range from 6 ohm.cm to 50 ohm.cm, said membrane being suspended above a substrate (4) integrating a signal for reading out the signal generated by said elementary detectors and for sequentially addressing the elementary detectors, and in which said cap is sealed by means of a seal on a chip supporting the array of elementary detectors or on a package at the bottom of which the chip supporting the array of elementary detectors has been attached, said cavity being under vacuum or a low pressure, in which method :

- the sealing of the upper cap of the cavity thereon, after the elementary detectors and the getter have been installed therein, is performed at a temperature in the range from 280°C to 320°C for a duration in the range from 10 to 90 minutes;
- and the activation of said getter is performed concurrently to the sealing of the upper cap of the cavity.

**2.** The method for forming an infrared radiation detector of claim 1, wherein the film (5) made of vanadium oxide VOx used to form the bolometric membrane (1) has a resistivity measured at 30°C in the range from 6 ohm.cm to 24 ohm.cm.

**3.** The method of forming an infrared radiation detector of claim 2, wherein the film (5) made of vanadium oxide VOx used to form the bolometric membrane (1) has a resistivity measured at 30°C in the range from 6 ohm.cm to 9 ohm.cm, *characterized* in that the sealing of the upper cap of the cavity thereon, after the elementary detectors and the getter have been installed therein, is performed at a temperature in the range from 280°C and 300° for a duration in the range from 10 to 90 minutes.

**4.** The method for forming an infrared radiation detector of any of claims 1 to 3, *characterized* in that the seal sealing the upper cap to the cavity is made of AuSn alloy.

5. An infrared radiation detector obtained with the method according to claims 1 to 4, comprising:

    - an array of elementary imaging bolometric detectors,
    - at least one getter intended to ensure the trapping of residual gas during and after the forming of the detector;
    - a hermetically-sealed cavity having said array and said at least one getter housed therein, having its upper cap comprising a window transparent to infrared radiation,

detector in which

    - each of the elementary bolometric detectors is formed of a bolometric membrane (1) comprising a film (5) made of vanadium oxide VOx, x being in the range from 1.8 to 2.3, said membrane being suspended above a substrate (4) integrating a signal for reading out the signal generated by said elementary detectors and for sequentially addressing the elementary detectors,
    - and said cap is sealed by means of a seal on a chip supporting the array of elementary detectors or on a package at the bottom of which the chip supporting the array of elementary detectors has been attached, said cavity being under vacuum or a low pressure.

6. The infrared radiation detector of claim 5, *characterized* **in that** the seal sealing the upper cap to the cavity is made of AuSn alloy.

**Fig. 1**

**Fig. 2**

Nombre
de diodes

Nombre
de diodes

# Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 201609126 A

- US 6313463 B

**Littérature non-brevet citée dans la description**

- **BRYAN D. GAUNTT.** *The nano-composite nature of Vanadium oxyde thin-films for use in Infrared Micro-bolometers,* Mai 2011
- **BRYAN D. GAUNTT.** *The nano-composite nature of Vanadium oxyde thin films for use in Infrared Micro-bolometers,* Mai 2011
- **S. GARCIA-BLANCO et al.** Low temperature vacuum hermetic wafer-level package for uncooled microbolometer FPAs. *SPIE,* 2008, vol. 6884
- **S. GARCIA-BLANCO et al.** Hybrid wafer-level vacuum hermetic micropackaging technology for MOEMS-MEMS. *SPIE,* 2009, vol. 7208

- **BARRY COLE et al.** Integrated vacuum packaging for low-cost lightweight uncooled microbolometer arrays. *Proceedings of SPIE,* 2001
- **N.J. PODRAZA et al.** Electrical and optical properties of sputtered amorphous vanadium oxide thin films. *Journal of Applied physics,* 01 Avril 2012, vol. 111 (7
- **M.A.MOTYKA et al.** Mircostructural évolution of thin film vanadium oxide prepared by pulsed-direct current magnetron sputtering. *Journal of Applied Physics,* 2012, vol. 112 (9